# EUROPEAN PATENT APPLICATION

(11) **EP 4 780 002 A1**
(43) Date of publication of application: **22.07.2026**
(21) Application number: 24864760.4
(22) Date of filing: 13.09.2024
(51) Int. Cl.: H04N 21/466

(54) **INTERACTION METHOD AND APPARATUS, DEVICE AND STORAGE MEDIUM**

(30) Priority: 15.09.2023 CN 202311196665
(71) Applicant: BEIJING YOUZHUJU NETWORK TECHNOLOGY CO. LTD., Beijing 101299 (CN)
(72) Inventor: FAN, Kequan, Beijing 100028 (CN); GONG, Jingwen, Beijing 100028 (CN)
(74) Representative: Grünecker Patent- und Rechtsanwälte PartG mbB
(86) International application number: PCT/CN2024/118920
(87) International publication number: WO 2025/056045

(57) **Abstract**

The embodiment of the disclosure provides an interaction method, apparatus, device, and storage medium. The method includes: playing a target video associated with a first object; and in accordance with a determination that interactive information of the target video meets a predetermined recommendation condition, displaying an object recommendation page in response to a recommendation trigger operation, wherein the object recommendation page displays object information of the first object and object information of a plurality of second objects; the number of information types in the object information of the first object is greater than the number of information types in the object information of the second object, and/or a display mode of the object information of the first object in the object recommendation page is different from a display mode of the second object. According to the solution of embodiments of this disclosure, the recommendation page containing different object may be accurately displayed, the accuracy of page display and the diversity of object recommendation are improved, the different recommended object may be effectively and quickly distinguished, and the interaction efficiency is improved.

## Description

The present application claims priority to Chinese Patent Application No. 202311196665.X, filed on September 15, 2023 and entitled "INTERACTION METHOD, APPARATUS, DEVICE AND STORAGE MEDIUM", the entirety of which is incorporated herein by reference.

### FIELD

Embodiments of the disclosure relate to Internet technologies, and in particular, to an interaction method, apparatus, device and storage medium.

### BACKGROUND

With the rapid development of mobile Internet, users prefer to use mobile devices to view videos. At present, objects such as articles are usually introduced in a video form, so that a user may better know about the objects. However, during video play, only direct recommendations are made for objects in the video, which reduces the accuracy and diversity of object recommendations.

### SUMMARY

The disclosure provides an interaction method, apparatus, device and storage medium for accurately displaying recommended pages containing different objects, improving the accuracy of page display and the diversity of object recommendations, and effectively distinguishing between different recommended objects, thereby improving interaction efficiency.

According to a first aspect, an embodiment of the disclosure provides an interaction method, comprising:
playing a target video associated with a first object; and
in accordance with a determination that interactive information of the target video meets a predetermined recommendation condition, displaying an object recommendation page in response to a recommendation trigger operation, wherein the object recommendation page displays object information of the first object and object information of a plurality of second objects; the number of information types in the object information of the first object is greater than the number of information types in the object information of the second object, and/or a display mode of the object information of the first object in the object recommendation page is different from a display mode of the second object.

According to a second aspect, an embodiment of the disclosure provides an interaction apparatus, comprising:
a video playing module configured to play a target video associated with a first object; and
a page displaying module configured to, in accordance with a determination that interactive information of the target video meets a predetermined recommendation condition, display an object recommendation page in response to a recommendation trigger operation, wherein the object recommendation page displays object information of the first object and object information of a plurality of second objects; the number of information types in the object information of the first object is greater than the number of information types in the object information of the second object, and/or a display mode of the object information of the first object in the object recommendation page is different from a display mode of the second object.

According to a third aspect, an embodiment of the disclosure provides an electronic device, comprising:
one or more processors;
a storage device storing one or more programs;
the one or more programs, when executed by the one or more processors, causing the one or more processors to implement the interaction method according to any embodiments of this disclosure.

According to a fourth aspect, an embodiment of the disclosure provides a storage medium comprising computer-executable instructions which, when executed by a computer processor, perform the interaction method according to any embodiments of this disclosure.

According to the embodiment of the disclosure, a target video associated with a first object is displayed, and an object recommendation page is displayed in accordance with a determination that interactive information of the target video meets a predetermined recommendation condition and in response to a recommendation trigger operation, so that the accuracy of object recommendation page display is ensured, and display interference is avoided. The object recommendation page displays object information of the first object and object information of a plurality of second objects, so that different objects are displayed, and the diversity of object recommendation is improved. The number of information types in the object information of the first object is greater than the number of information types in the object information of the second object, and/or a display mode of the object information of the first object in the object recommendation page is different from a display mode of the second object. In such a way, the different recommended objects can be effectively and quickly distinguished based on different information types or display modes, thus the interaction efficiency is improved.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and elements and components are not necessarily drawn to scale.
FIG. 1 is a schematic flowchart of an interaction method according to an embodiment of the present disclosure;
FIG. 2 is an example diagram of a page of a target video according to an embodiment of the present disclosure;
FIG. 3 is an example diagram of an object recommendation page according to an embodiment of the present disclosure;
FIG. 4 is an example diagram of an object recommendation page update according to an embodiment of the present disclosure;
FIG. 5 is a schematic flowchart of another interaction method according to an embodiment of the present disclosure;
FIG. 6 is an example diagram of an object recommendation page according to an embodiment of the present disclosure;
FIG. 7 is an example diagram of an order generation process according to an embodiment of the present disclosure;
FIG. 8 is an example diagram of an object recommendation page according to an embodiment of the present disclosure;
FIG. 9 is an example diagram of an object recommendation page according to an embodiment of the present disclosure;
FIG. 10 is a schematic structural diagram of an interaction apparatus according to an embodiment of the present disclosure; and
FIG. 11 is a schematic structural diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein. Rather, these embodiments are provided for a more thorough and complete understanding of the present disclosure. It should be understood that the drawings and embodiments of the present disclosure are for exemplary purposes only and are not intended to limit the scope of the present disclosure.

It should be understood that the steps recited in the method embodiments of the present disclosure may be performed in different orders, and/or in parallel. Further, the method embodiments may include additional steps and/or omit performing the illustrated steps. The scope of the present disclosure is not limited in this respect.

As used herein, the term "comprises" and variation thereof are open-ended, i.e., "comprises but not limited to". The term "based on" means "based at least in part on". The term "one embodiment" means "at least one embodiment"; the term "another embodiment" means "at least one further embodiment"; and the term "some embodiments" means "at least some embodiments". The relevant definition of other terms will be given below.

It should be noted that terms such as "first" and "second" mentioned in this disclosure are merely used to distinguish different apparatuses, modules, or units, and are not intended to limit the order of functions performed by the apparatuses, modules, or units or the mutual dependency relationship.

It should be noted that the modification of "a" and "a plurality" mentioned in this disclosure is illustrative and not limiting, and those skilled in the art should understand that they means "one or more" unless the context clearly indicates otherwise.

The names of messages or information interacted between a plurality of devices in embodiments of the present disclosure are for illustrative purposes only, and are not intended to limit the scope of such messages or information.

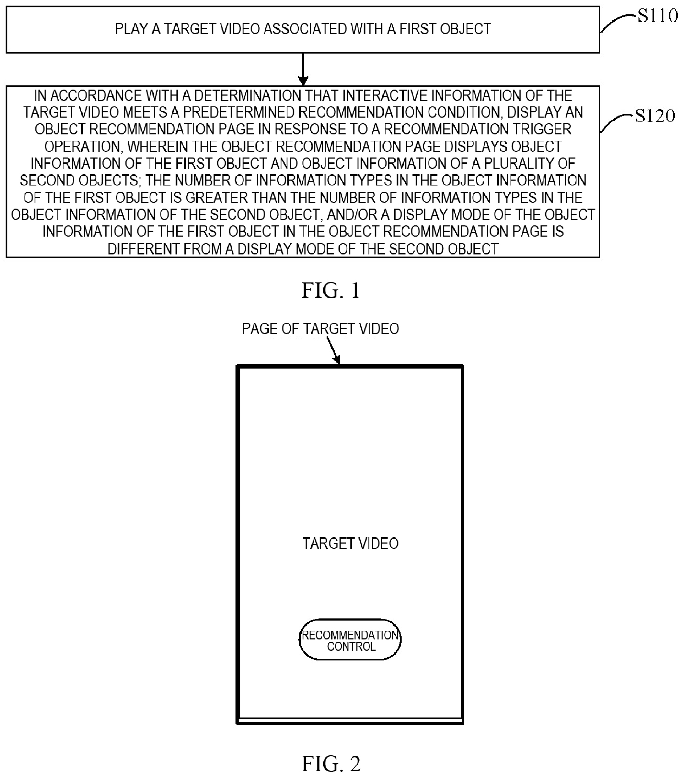

FIG. 1 is a schematic flowchart of an interaction method according to an embodiment of the present disclosure. The embodiment of the present disclosure is applicable to interacting with target videos and displaying object recommendation pages containing different objects. The method may be executed by an interaction apparatus, which may be implemented in the form of software and/or hardware, optionally, by an electronic device. The electronic device may be a mobile terminal or PC and the like.

As shown in FIG. 1, the interaction method specifically comprises the following steps:
S110: play a target video associated with a first object.

The first object may be any object that needs to be recommended to the user. For example, the first object may refer to an article or service that is recommended to a user to purchase. The target video may refer to a video associated with the first object. For example, the target video may be a video used to describe the first object information, or the target video comprises anchor information of the first object.

Specifically, the user opens a playing end, and plays the target video associated with the first object on the playing end, so that the user may view the target video.

S120: in accordance with a determination that interactive information of the target video meets a predetermined recommendation condition, display an object recommendation page in response to a recommendation trigger operation, wherein the object recommendation page displays object information of the first object and object information of a plurality of second objects; the number of information types in the object information of the first object is greater than the number of information types in the object information of the second object, and/or a display mode of the object information of the first object in the object recommendation page is different from a display mode of the second object.

The interactive information of the target video may refer to the interactive act information between the user and the target video. For example, the interactive information may comprise, but is not limited to, at least one of comment information, like information, forwarding information, and viewing video publisher information of the target video. The predetermined recommendation condition may be predetermined to represent a condition that required to be meet for the user being interested in the first object in the target video. For example, the predetermined recommendation condition may refer to that the user has at least one interactive act with the target video, such as a comment act, a like act, a forwarding act, and a viewing publisher video act. The recommendation trigger operation may refer to an operation triggered by the user on the page of the target video and used to display the object recommendation page.

The second object may refer to an object different from the first object that needs to be recommended to the user. The second object may also refer to an article or service recommended to the user to purchase. For example, the second object may refer to a similar object matching the first object, so as to recommend the first object and the similar object to the user at the same time, thereby improving the recommendation effect. The similar object may refer to an object matching the first object in the at least one object information dimension. The object information dimension may comprise, but is not limited to, at least one of an object introduction keyword, an object introduction picture, and an object use. The number of the second object may not be fixed, and may be one or more. The object recommendation page may be a page for displaying the object information of the first object and the object information of the second object. For example, the object recommendation page is a page recommended to the user and may purchase the first object and the second object. Both the object information of the first object and the object information of the second object may include various types of information. The number of information types in the object information of the first object is greater than the number of information types in the object information of the second object. The display mode of the object information of the first object is different from a display mode of the object information of the second object. The different points of the display mode may be different in any display dimension, so that the user can effectively distinguish the first object from the second object.

Specifically, in the process of playing the target video, the interactive information of the target video may be obtained, and whether the interactive information of the target video meets the predetermined recommendation condition is detected in real time. When it is detected that the interactive information of the target video meets the predetermined recommendation condition, it indicates that the user is likely to be interested in the first object associated with the target video, and wants to view the first object. When the user performs the recommended trigger operation on the page of the target video, it indicates that the user is interested in the first object, and at this time, the playing end displays, in response to the recommended trigger operation, an object recommendation page comprising the object information of the first object and the object information of the second object, to enable the user to view both the first object and the second object on the object recommendation page, thereby ensuring accuracy of display of the object recommendation page and diversity of object recommendation.

For example, the difference between the object information of the first object and the object information of the second object displayed in the object recommendation page may comprise the following:
In a first case, the number of information types in the object information of the first object is greater than the number of information types in the object information of the second object, and the display mode of the object information of the first object is the same as the display mode of the second object.

In a second case, the number of information types in the object information of the first object is equal to the number of information types in the object information of the second object, and the display mode of the object information of the first object is different from the display mode of the second object.

In a third case, the number of information types in the object information of the first object is greater than the number of information types in the object information of the second object, and the display mode of the object information of the first object is different from the display mode of the second object.

Through the three different display cases, the recommended first object and the recommended second object may be effectively distinguished, so that the user may quickly position the first object based on difference of the number of information types or difference of display mode, thus the interaction efficiency of the user with the first object is improved.

For example, the object recommendation page display process in step S120 may be implemented in at least two manners as follows:
As an implementation, S120 may comprise: in accordance with a determination that the interactive information of the target video meets the predetermined recommendation condition, displaying a recommendation control on a page of the target video; displaying the object recommendation page in response to a trigger operation on the recommendation control or a predetermined switching operation triggered on the page of the target video.

The recommendation control may be a control for the user to trigger the recommendation operation. The recommendation control may be located anywhere on the page of the target video. The predetermined switching operation may be an operation for switching the video page to the recommendation page. For example, the predetermined switching operation may be a sliding operation for switching page by sliding, or the predetermined switching operation may be a click operation for switching by clicking the recommendation page tag. For example, when the recommendation page tag is located on the left side of the video page tag, the recommendation page may be switched to by sliding to the right or clicking the recommendation page tag.

Specifically, referring to FIG. 2, when the target video is played, if it is detected that the interactive information of the target video meets the predetermined recommendation condition, it indicates that the user is likely to be interested in the first object associated with the target video, and at this time, the recommendation control may be first displayed on the page of the target video, so as to prompt the user to view the recommendation page by triggering the recommendation control. When the user is indeed interested in the first object, the trigger may be implemented by clicking on the recommendation control and the like. The playing end may switch from the page of the target video to the object recommendation page for display in response to the trigger operation on the recommendation control. Alternatively, after the recommendation control is displayed, the user may also display the object recommendation page by triggering a predetermined switching operation on the page of the target video, thereby improving page display flexibility.

As another implementation, S120 may comprise: detecting, in response to the predetermined switching operation triggered on the page of the target video, whether interactive information of the target video meets a predetermined recommendation condition; in accordance with a determination that the interactive information of the target video meets the predetermined recommendation condition, displaying the object recommendation page.

The predetermined switching operation may be an operation for switching the video page to the recommendation page. For a specific implementation of the predetermined switching operation, refer to the foregoing description. Specifically, when the target video is played, if the user is interested in the first object associated with the target video, the user may trigger the predetermined switching operation on the page of the target video, so that the playing end detects whether the interactive information of the target video meets the predetermined recommendation condition in response to the predetermined switching operation, so as to determine whether the object recommendation page is displayed. If the interactive information of the target video meets the predetermined recommendation condition, it indicates that the user is indeed interested in the first object associated with the target video, and is not a misoperation. At this time, the object recommendation page may be directly displayed, thereby ensuring accuracy of display of the object recommendation page and improving interaction experience.

According to the technical solution provided by the embodiment of the disclosure, a target video associated with a first object is displayed, and an object recommendation page is displayed in accordance with a determination that interactive information of the target video meets a predetermined recommendation condition and in response to a recommendation trigger operation, so that the accuracy of object recommendation page display is ensured, and display interference is avoided. The object recommendation page displays object information of the first object and object information of a plurality of second objects, so that different objects are displayed, and the diversity of object recommendation is improved. The number of information types in the object information of the first object is greater than the number of information types in the object information of the second object, and/or a display mode of the object information of the first object in the object recommendation page is different from a display mode of the second object. In such a way, the different recommended objects can be effectively and quickly distinguished based on different information types or display modes, thus the interaction efficiency is improved.

On the basis of the technical solution, the object recommendation page comprises a first display region and a second display region, the first display region is located below the second display region, the first display region is configured to display the object information of the first object and the object information of the plurality of second object, and the second display region is configured to display at least one function item information and/or at least one recommendation item information.

The width of the first display region and the width of the second display region may be equal, which are both equal to the screen width. The first display region is located below the second display region. The object information of the first object and the object information of all the second object may be viewed in the first display region by sliding up and down. The function item information displayed in the second display region may be function module information used to implement a specific function. For example, the function item information may be "my order" or "customer service message", and so on. The function page corresponding to the function item information may be displayed by clicking the function item information, so that the user can view and interact in the function page. The recommendation item information displayed in the second display region may be recommendation module information for recommending a specific object. For example, the recommendation item information may be recommended live streaming room information, brand item information, low price item information, and the like.

For example, the "displaying the object recommendation page" in step S120 may comprise: displaying the first display region on the object recommendation page, and not displaying the second display region .

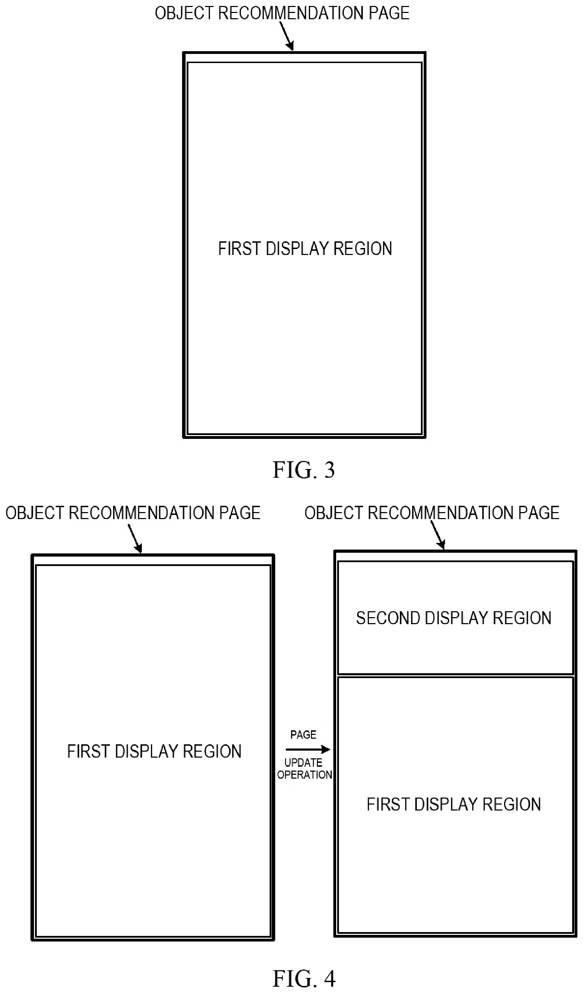

Specifically, referring to FIG. 3, after responding to the recommendation triggering operation, the playing end only display the first display region on the object recommendation page, and do not display the second display region. For example, the second display region in the object recommendation page is hidden or moved upwards out of the screen, and the first display region is positioned on the top to display, so that a larger range of the first display region is displayed in the object recommendation page. Thus, object information of the first object and more object information of the second object are displayed in the object recommendation page, and the object viewing efficiency is improved.

For example, after S120, the method may further comprise: in response to an object recommendation page update operation, displaying an updated object recommendation page, the first display region and the second display region being displayed in the updated object recommendation page, the first display region being used to display object information of an updated third object.

Specifically, referring to FIG. 4, after the object recommendation page comprising only the first display region is displayed in response to the recommendation trigger operation, if the user wants to update the object recommendation page, he/she may trigger the update operation by performing a pull-down operation on the currently displayed object recommendation page or clicking a refresh control. In response to the update operation of the object recommendation page, the playing end may determine object information of the updated third object. For example, the object information of the third object in which the user may be interested is determined based on the interactive information of the user with all videos, and the object recommendation page comprising both the first display region and the second display region at the same time is displayed, and the object information of the updated third object is displayed in the first display region, so that the display of the second display region may be recovered by using the page update operation, thus the personalized viewing requirement is met.

It should be noted that the number of information types in the object information of the third object may be equal to the number of information types in the object information of the second object. The display mode of the object information of the third object in the updated object recommendation page may the same as the display mode of the object information of the second object.

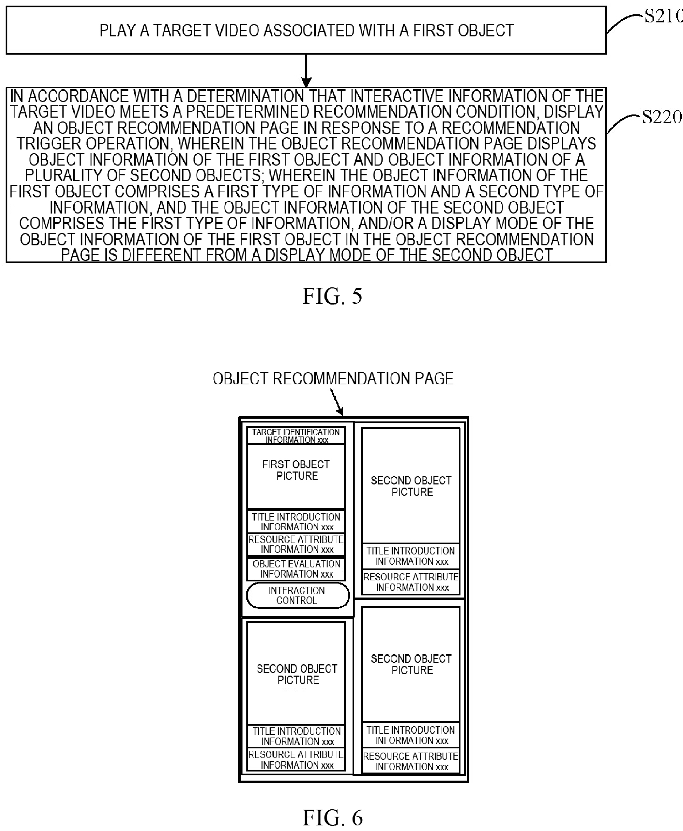

FIG. 5 is a schematic flowchart of another interaction method according to an embodiment of the present disclosure. On the basis of the above disclosed embodiments, this embodiment provides a detailed description of the object information of the first object and the object information of the second object, wherein the explanation of the same or corresponding terms as the above disclosed embodiments will not be repeated here.

As shown in FIG. 5, the interaction method specifically comprises the following steps:
S210: play a target video associated with the first object.
S220: in accordance with the determination that the interactive information of the target video meets the predetermined recommendation condition, displaying the object recommendation page in response to the recommendation trigger operation, wherein the object recommendation page displays object information of the first object and object information of a plurality of second objects; the object information of the first object comprises a first type of information and a second type of information, and the object information of the second object comprises the first type of information; and/or a display mode of the object information of the first object in the object recommendation page is different from a display mode of the second object.

The first type of information may refer to the same type information comprised in both the first object and the second object. For example, the first type of information may comprise, but not limited to, at least one of: picture information, title introduction information, or resource attribute information. The picture information may refer to a picture used to describe an object. The title introduction information may refer to the title text information used to describe the key information of the object. The object key information may comprise information such as an object name, an object function use, and a brand to which the object belongs. The resource attribute information may refer to resource information used to obtain an object. For example, the resource attribute information may comprise at least one of an object price, object coupon information, and object sales information.

The second type information may refer to type information that the first object comprises more than the second object. For example, the second type of information comprises at least one of: object evaluation information, interaction control and target identification information. The object evaluation information may comprise favorable rate information and the like. The interaction control may be configured to trigger display of an information confirmation page of the first object. The information confirmation page may be a page displayed to the user for confirming the object information. The interaction control may be located at any position of the display region of the first object. For example, referring to FIG. 6, the interaction control is displayed at a position below the target evaluation information. The target identification information may be configured to reflect an association relationship between the first object and the target video. The target identification information may be characterized by at least one of words, letters, special characters. The target identification information may be used to represent that the first object is an object associated with the target video. For example, the target identification information may be "same one with video". The target identification information may be located at any position of the display region of the first object. For example, referring to FIG. 6, the target identification information is displayed at a top-left corner of the first object picture.

Specifically, referring to FIG. 6, as a first implementation, the object information of the first object displayed in the object recommendation page may comprise the object evaluation information, while the object information of each second object does not comprise the object evaluation information. Therefore, the first object and the second object may be effectively distinguished by whether the object evaluation information is displayed.

As a second implementation, the object information of the first object displayed in the object recommendation page may comprise an interaction control, while the object information of each second object does not comprise an interaction control. Therefore, the first object and the second object may be effectively distinguished by whether the interaction control is displayed.

In a third implementation, the object information of the first object displayed in the object recommendation page may comprise the target identification information, while the object information of each second object does not comprise the target identification information. Therefore, the first object and the second object may be effectively distinguished by whether the target identification information is displayed.

The foregoing three implementations may be combined in any two, or may comprise the foregoing three implementations at the same time, as shown in FIG. 6, so that the display differences of the first object and the second object may be further highlighted. Therefore, the first object and the second object may be quickly distinguished from each other by the user, and the viewing efficiency of the object may be further improved.

For example, when the interaction control is an ordering control, after S220, the method may further comprise: in response to a trigger operation on the ordering control of the first object, displaying the information confirmation page of the first object; and in response to a submission operation triggered on the information confirmation page, generating an order of the first object.

The information confirmation page may comprise a first information confirmation page or a second information confirmation page. The first information confirmation page may be used to display all optional type information of the first object when the first object has at least two optional types of information, so that the user selects and confirms the desired type of information from the first information confirmation page. The second information confirmation page may be used to display final ordering information of the first object when the first object has only one type information or after the user selects the type information, for example, display information such as receiving address information, type information and payment mode of the first object.

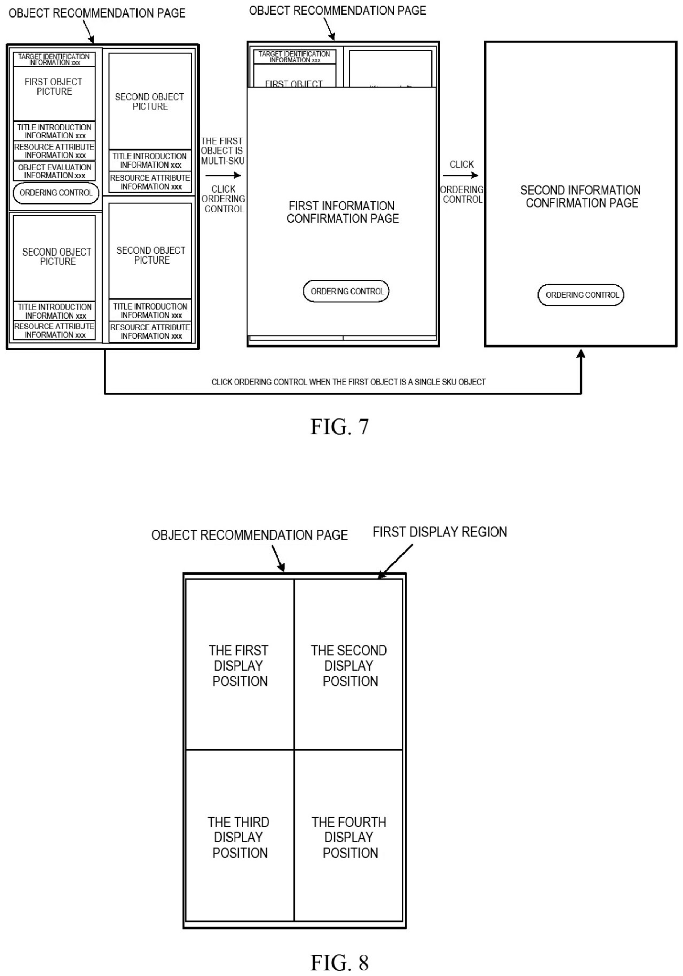

Specifically, if the user wants to place an order to purchase the first object, a quick trigger may be implemented by clicking the interaction control displayed in the object recommendation page. The generation of the first object order may be implemented by at least two ways as follows:
In an implementation, referring to FIG. 7, when there are at least two types of selectable model information of the first object, for example, when the first object is a multi-SKU (Stock Keeping Unit) object, the first information confirmation page of the first object may be first displayed in response to the trigger operation on the interaction control in the object recommendation page, so that the user selects the desired model information from the first obtaining page. The displayed first information confirmation page may cover a local area of the object recommendation page. After the model information selection ends, the ordering control in the first information confirmation page may be clicked to trigger the display of the second information confirmation page, so that the user confirms the final ordering information in the second information confirmation page. Then, after the confirm, a submission operation may be triggered by clicking the ordering control in the second information confirmation page. An order of the first object may be generated based on the ordering information in the second information confirmation page in response to the commit operation.

In another implementation, referring to FIG. 7, there is only one type of model information of the target object, thus there is no need to select the model information. For example, when the first object is a single SKU object, the second information confirmation page of the first object may be directly displayed in response to a trigger operation on the interaction control in the object recommendation page. An order of the first object is generated based on the ordering information in the second information confirmation page in response to a trigger operation on the ordering control in the second information confirmation page.

By directly displaying the ordering control of the first object in the object recommendation page, the order of the first object may be generated more quickly, and the ordering efficiency is improved.

According to the technical solution of the embodiment of the disclosure, the object information of the first object displays more second type information than the object information of the second object, so that the user can clearly distinguish the recommended first object and the second object based on the second type information, thus the object interaction efficiency is improved.

Based on the above technical solution, the display mode of the object information of the first object in the object recommendation page is different from the display mode of the second object, which may comprises:
a display position of the object information of the first object in the object recommendation page is different from a display position of the second object; and/or
a display form of the object information of the first object in the object recommendation page is different from a display form of the second object.

Different display modes may comprise at least one of different display positions or different display forms. The display position may refer to a position in the object recommendation page for displaying the object information. For example, the object recommendation page may comprise a first display region. The first display region is configured to display the object information of the first object and the object information of the plurality of second objects. The first display region may comprise a plurality of display positions, and different display positions are used to display object information of different object.

For, example, the display position of the object information of the first object in the object recommendation page is different from the display position of the second object may comprise: displaying the object information of the first object at a first display position of the first display region; and displaying the object information of the second object at a display position other than the first display position.

Specifically, referring to FIG. 8, when the object recommendation page is a list structure, the first display position in the first display region is the position of the first column and the first row, and the object information of the first object is displayed at the first display position. The object information of second objects is respectively displayed at the second display position and the following display position. The first object and the second object can be effectively distinguished by different display positions.

For example, the display form may refer to the form of a display region for displaying object information. For example, different display forms may comprise, but are not limited to, at least one of different border lines of the display region and different contour lines.

As an optional implementation, the display form of the object information of the first object in the object recommendation page is different from the display form of the second object comprises:
highlighting a first object display region in the object recommendation page, the first object display region being used to display the object information of the first object; and not highlighting a second object display region in the object recommendation page, the second object display region being used to display the object information of the second object. The first object and the second object can be effectively distinguished by whether highlighting the display region.

For example, highlighting the first object display region in the object recommendation page comprises: highlighting a contour line of the first object display region based on a predetermined highlight color.

Specifically, in the object recommendation page, the contour line of the first object display region may be displayed with a predetermined highlight color, such as red, while the contour line of each second object display region is displayed with a non-highlight color, such as white. In such a way, the first object and the second object can be distinguished more clearly by using different contour lines of the display regions, thereby further improving user viewing efficiency.

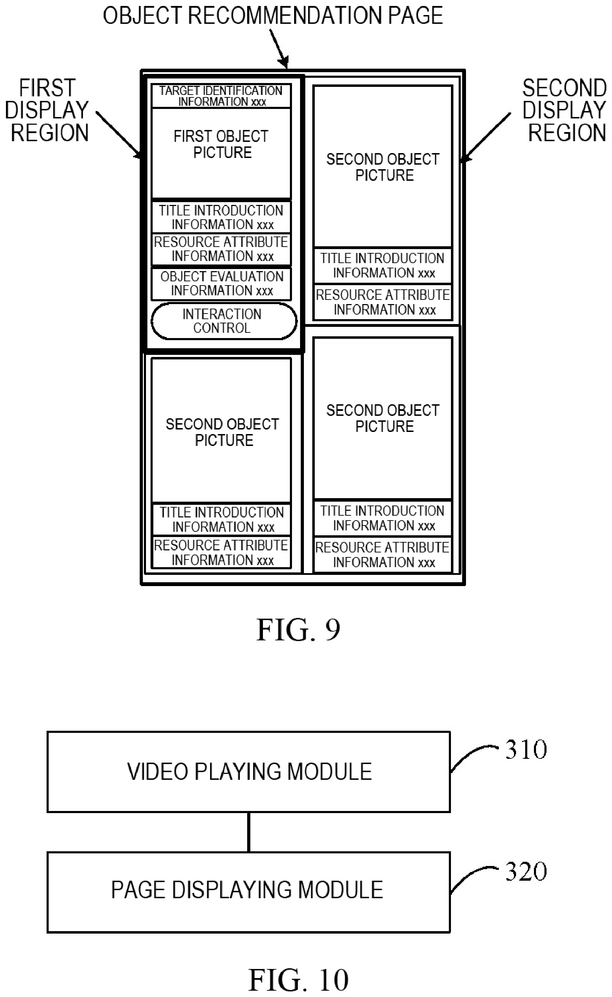

Referring to FIG. 9, which shows an implementation of an object recommendation page, and the black bold border in FIG. 9 represents a highlighted first object display region. The outline of the second object display region in FIG. 9 is not bolded, and it represents that non-highlighted display.

For example, when the display region of the first object is highlighted, after S220, the method further comprises at least one of:
in response to an interactive operation triggered for the object recommendation page, not highlighting the first object display region;
in response to there being no interactive operation triggered for the object recommendation page within a predetermined duration, not highlighting the first object display region.

The interaction operation may refer to an interaction operation between the user and an object in the object recommendation page, for example, an operation of clicking an object by the user or an operation of purchasing an object by the user. The predetermined duration may be a predetermined maximum duration of highlighting. For example, the predetermined duration is 3 seconds.

Specifically, after the object recommendation page comprising both the first object and the second object is displayed, the playing end may monitor, in real time, whether there is an interaction operation triggered by the user on the object recommendation page. If the interaction operation is detected, it indicates that the user has learned the display position of the first object to a great extent. In order to avoid excessively distinguishing the display, the first object display region may be displayed in a non-highlighted manner, so that the highlight display of the first object display region is canceled, thus both the first object display region and the second object display region are non-highlighted, and the user viewing experience is improved.

Alternatively, after displaying the object recommendation page, the playing end may monitor whether there is interaction operation triggered by a user within a predetermined duration. If the user triggers the interaction operation on the object recommendation page within the predetermined duration after the object recommendation page is displayed, the first object display region is not highlighted in response to the interaction operation, so that the highlight display of the first object display region is canceled in time. If the user does not trigger the interaction operation on the object recommendation page within the predetermined duration after the object recommendation page is displayed, the first object display region may also be non-highlighted, the highlight display of the first object display region is canceled, thus the situation that the first object display region is always highlighted due to long-term non-interaction is avoided, excessively distinguishing display are avoided, and the user viewing experience is improved.

FIG. 10 is a schematic structural diagram of an interaction apparatus according to an embodiment of the present disclosure. As shown in FIG. 10, the apparatus comprises a video playing module 310 and a page displaying module 320.

The video playing module 310 is configured to play a target video associated with a first object. The page displaying module 320 is configured to, in accordance with a determination that interactive information of the target video meets a predetermined recommendation condition, display an object recommendation page in response to a recommendation trigger operation, wherein the object recommendation page displays object information of the first object and object information of a plurality of second objects; the number of information types in the object information of the first object is greater than the number of information types in the object information of the second object, and/or a display mode of the object information of the first object in the object recommendation page is different from a display mode of the second object.

According to the technical solution provided by the embodiment of the disclosure, a target video associated with a first object is displayed, and an object recommendation page is displayed in accordance with a determination that interactive information of the target video meets a predetermined recommendation condition and in response to a recommendation trigger operation, so that the accuracy of object recommendation page display is ensured, and display interference is avoided. The object recommendation page displays object information of the first object and object information of a plurality of second objects, so that different objects are displayed, and the diversity of object recommendation is improved. The number of information types in the object information of the first object is greater than the number of information types in the object information of the second object, and/or a display mode of the object information of the first object in the object recommendation page is different from a display mode of the second object. In such a way, the different recommended objects can be effectively and quickly distinguished based on different information types or display modes, thus the interaction efficiency is improved.

Based on the above technical solution, the page display module 320 is specifically configured to:
in accordance with a determination that the interactive information of the target video meets the predetermined recommendation condition, display a recommendation control on a page of the target video; display the object recommendation page in response to a trigger operation on the recommendation control or a predetermined switching operation triggered on the page of the target video.

Based on the above technical solution, the page display module 320 is specifically configured to:
detect, in response to the predetermined switching operation triggered on the page of the target video, whether interactive information of the target video meets a predetermined recommendation condition; in accordance with a determination that the interactive information of the target video meets the predetermined recommendation condition, display the object recommendation page.

Based on the above technical solution, the object information of the first object comprises a first type of information and a second type of information, and the object information of the second object comprises the first type of information;
wherein the first type of information comprises at least one of:
picture information, title introduction information, or resource attribute information;
the second type of information comprises at least one of:
   object evaluation information, interaction control and target identification information; wherein the interaction control is configured to trigger display of an information confirmation page of the first object, the target identification information is configured to reflect an association relationship between the first object and the target video.

Based on the above technical solution, the interaction control is an ordering control; and the apparatus further comprises:

an ordering generation module configured to, after the object recommendation page is displayed, in response to a trigger operation on the ordering control of the first object, display the information confirmation page of the first object; and in response to a submission operation triggered on the information confirmation page, generating an order of the first object.

Based on the above technical solution, the display mode of the object information of the first object in the object recommendation page is different from the display mode of the second object comprises:
a display position of the object information of the first object in the object recommendation page is different from a display position of the second object; and/or
a display form of the object information of the first object in the object recommendation page is different from a display form of the second object.

Based on the above technical solution, the object recommendation page comprises a first display region, the first display region is configured to display the object information of the first object and the object information of the plurality of second objects;
the display position of the object information of the first object in the object recommendation page is different from the display position of the second object comprises: displaying the object information of the first object at a first display position of the first display region; and
displaying the object information of the second object at a display position other than the first display position.

Based on the above technical solution, the display form of the object information of the first object in the object recommendation page is different from the display form of the second object comprises:
highlighting a first object display region in the object recommendation page, the first object display region being used to display the object information of the first object; and
not highlighting a second object display region in the object recommendation page, the second object display region being used to display the object information of the second object.

Based on the above technical solution, highlighting the first object display region in the object recommendation page comprises:
highlighting a contour line of the first object display region based on a predetermined highlight color.

Based on the above technical solution, the apparatus further comprises:
a highlight cancel module configured to, after the object recommendation page is displayed, in response to an interactive operation triggered for the object recommendation page, not highlight the first object display region; and/or
in response to there being no interactive operation triggered for the object recommendation page within a predetermined duration, not highlight the first object display region.

Based on the above technical solution, the object recommendation page comprises a first display region and a second display region, the first display region is located below the second display region, the first display region is configured to display the object information of the first object and the object information of the plurality of second object, and the second display region is configured to display at least one function item information and/or at least one recommendation item information;
a page display module 320 configured to display the first display region on the object recommendation page, and not display the second display region.

Based on the above technical solution, the apparatus further comprises:
a page update module configured to, after the object recommendation page is displayed, in response to an object recommendation page update operation, display an updated object recommendation page, the first display region and the second display region being displayed in the updated object recommendation page, the first display region being used to display object information of an updated third object.

The interaction apparatus provided in the embodiments of the present disclosure may perform the interaction method provided in any embodiment of the present disclosure, and has corresponding functional modules and beneficial effects of performing the interaction method.

It should be noted that the units and modules comprised in the foregoing apparatus are only divided according to the function logic, but are not limited to the foregoing division, as long as the corresponding functions can be implemented. In addition, the specific names of the functional units are merely for ease of distinguishing, and are not intended to limit the protection scope of the embodiments of the present disclosure.

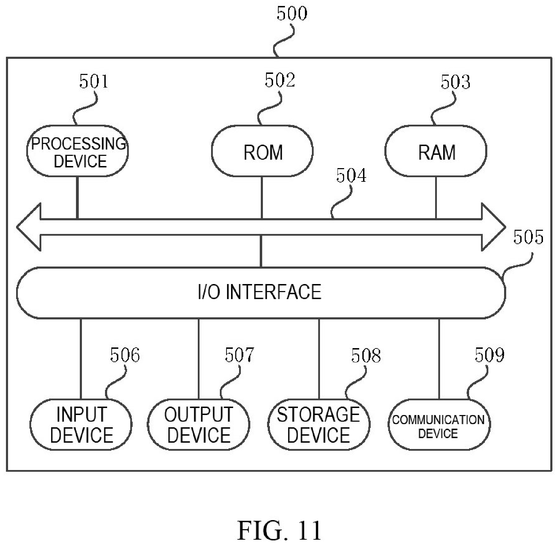

FIG. 11 is a schematic structural diagram of an electronic device according to an embodiment of this disclosure. Reference now is made with FIG. 11, which is a schematic structural diagram of an electronic device (such as the terminal device or server in FIG. 11) 500 suitable for implementing the embodiments of the disclosure. The terminal device in the embodiments of the disclosure may comprise, but not limited to, a mobile terminal such as a mobile phone, a notebook computer, a digital broadcast receiver, a PDA (personal digital assistant), a PAD (portable Android device), a PMP (portable media player), an in-vehicle terminal (for example, an in-vehicle navigation terminal), and a fixed terminal such as a digital TV, a desktop computer, or the like. The electronic device shown in FIG. 11 is merely an example, and should not impose any limitation on the functionality and scope of use of the embodiments of the disclosure.

As shown in FIG. 11, the electronic device 500 may include a processing device (for example, a central processing unit, a graphics processor, etc.) 501, and the processing device 501 may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An edit/output (I/O) interface 505 is also connected to the bus 504.

Generally, the following devices may be connected to the I/O interface 505: an input device 506 including, for example, a touch screen, a touch pad, a keyboard, a mouse, a camera, a microphone, an accelerometer, a gyroscope, and the like; an output device 507 including, for example, a liquid crystal display (LCD), a speaker, a vibrator, and the like; a storage device 508 including, for example, a magnetic tape, a hard disk, and the like; and a communication device 509. The communication device 509 may allow the electronic device 500 to communicate wirelessly or wired with other devices to exchange data. While FIG. 11 shows an electronic device 500 having various devices, it should be understood that it is not required to implement or have all illustrated devices. More or fewer devices may alternatively be implemented or provided.

In particular, according to an embodiment of this disclosure, the process described above with reference to the flowchart may be implemented as a computer software program. For example, embodiments of the disclosure comprise a computer program product comprising a computer program embodied on a non-transitory computer readable medium, the computer program comprising program code for performing a method shown in flowchart. In such embodiments, the computer program may be downloaded and installed from the network through the communication device 509, or installed from the storage device 508, or from the ROM 502. When the computer program is executed by the processing device 501, the foregoing functions defined in the method of the embodiments of the present disclosure are performed.

The names of messages or information interacted between a plurality of devices in embodiments of the present disclosure are for illustrative purposes only, and are not intended to limit the scope of such messages or information.

The electronic device provided by the embodiments of the disclosure and the interaction method provided in the foregoing embodiments belong to the same inventive concept, and technical details not described in detail in this embodiment may refer to the foregoing embodiments, and this embodiment has the same beneficial effects as the foregoing embodiments.

An embodiment of the present disclosure provides a computer storage medium, having a computer program stored thereon, where the computer program, when executed by a processor, implements the interaction method provided in the foregoing embodiments.

It should be noted that the computer readable medium described above may be a computer readable signal medium, or a computer readable storage medium, or a combination of the both. The computer-readable storage medium may be, for example, but not limited to, an electrical, magnetic, optical, electromagnetic, infrared, or semiconductor system, apparatus, or device, or a combination thereof. Examples of the computer-readable storage medium may comprise, but not limited to: an electrical connection having one or more wires, a portable computer diskette, a hard disk, a random access memory (RAM), a read-only memory (ROM), an erasable programmable read-only memory (such as an electronic programmable read-only memory (EPROM) or flash memory), an optical fiber, a portable compact disc read-only memory (CD-ROM), an optical storage device, a magnetic storage device, or a suitable combination thereof. In the disclosure, a computer-readable storage medium may be a tangible medium containing or storing a program that may be used by or in connection with an instruction execution system, apparatus, or device. In the disclosure, a computer readable signal medium may comprise a data signal propagated in baseband or as part of a carrier, where the computer readable program code is carried. Such propagated data signals may take a variety of forms, comprising but not limited to electromagnetic signals, optical signals, or suitable combinations thereof. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted by any suitable medium, comprising but not limited to wires, optical cables, RF (radio frequency), and the like, or suitable combinations thereof.

In some implementations, the client, server may communicate using any currently known or future developed network protocol, such as HTTP (Hypertext Transfer Protocol), and may be interconnected with any form or medium of digital data communication (e.g., a communication network). Examples of communication networks include Local Area Networks (LANs), Wide Area Networks (WANs), Internet networks (e.g., the Internet), and peer-to-peer networks (e.g., ad hoc peer-to-peer networks), as well as currently known or future developed networks.

The computer-readable medium described above may be comprised in the electronic device; or may be separately present without being assembled into the electronic device.

The computer readable medium carries one or more programs, and when one or more programs is executed by the electronic device, the electronic device is caused to: playing a target video associated with a first object; and in accordance with a determination that interactive information of the target video meets a predetermined recommendation condition, displaying an object recommendation page in response to a recommendation trigger operation, wherein the object recommendation page displays object information of the first object and object information of a plurality of second objects; the number of information types in the object information of the first object is greater than the number of information types in the object information of the second object, and/or a display mode of the object information of the first object in the object recommendation page is different from a display mode of the second object.

Computer program code for performing the operations of the present disclosure may be written in one or more programming languages, including, but not limited to, object-oriented programming languages such as Java, Smalltalk, C++, and conventional procedural programming languages, such as the "C" language or similar programming languages. The program code may execute entirely on a user computer, partially on a user computer, as a stand-alone software package, partially on a user computer and partially on a remote computer, or entirely on a remote computer or server. In the case of a remote computer involved, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that comprises one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of the module does not constitute a limitation on the unit itself in some cases. For example, the first obtaining unit may be described as "a unit that obtains at least two Internet Protocol addresses".

The functions described above may be performed, at least in part, by one or more hardware logic components. For example, without limitation, exemplary types of hardware logic components that may be used comprise: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The server-readable medium may be a server-readable signal medium or a server-readable storage medium. The server-readable medium may comprise electronic, magnetic, optical, electromagnetic, infrared, or semiconductor systems, apparatus, or devices, or any suitable combination of the foregoing. The examples of server-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the technical solution formed by mutually replacing the above features and the technical features have similar functions disclosed (but not limited to) in the present disclosure.

Further, while operations are depicted in a particular order, this should not be understood to require that these operations be performed in the particular order shown or in sequential order. In certain circumstances, multitasking and parallel processing may be advantageous. Likewise, while several specific implementation details are comprised in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable sub-combination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. An interaction method, comprising:
playing a target video associated with a first object;
in accordance with a determination that interactive information of the target video meets a predetermined recommendation condition, displaying an object recommendation page in response to a recommendation trigger operation, wherein the object recommendation page displays object information of the first object and object information of a plurality of second objects; the number of information types in the object information of the first object is greater than the number of information types in the object information of the second object, and/or a display mode of the object information of the first object in the object recommendation page is different from a display mode of the second object.

2. The interaction method of claim 1, wherein in accordance with the determination that the interactive information of the target video meets the predetermined recommendation condition, displaying the object recommendation page in response to the recommendation trigger operation comprises:
in accordance with a determination that the interactive information of the target video meets the predetermined recommendation condition, displaying a recommendation control on a page of the target video; displaying the object recommendation page in response to a trigger operation on the recommendation control or a predetermined switching operation triggered on the page of the target video; and/or
in accordance with the determination that the interactive information of the target video meets the predetermined recommendation condition, displaying the object recommendation page in response to the recommendation trigger operation comprises:
detecting, in response to the predetermined switching operation triggered on the page of the target video, whether interactive information of the target video meets a predetermined recommendation condition; in accordance with a determination that the interactive information of the target video meets the predetermined recommendation condition, displaying the object recommendation page.

3. The interaction method of claim 1, wherein the object information of the first object comprises a first type of information and a second type of information, and the object information of the second object comprises the first type of information;
wherein the first type of information comprises at least one of:
picture information, title introduction information, or resource attribute information; and
the second type of information comprises at least one of:
object evaluation information, interaction control and target identification information; wherein the interaction control is configured to trigger display of an information confirmation page of the first object, the target identification information is configured to reflect an association relationship between the first object and the target video; and/or
the display mode of the object information of the first object in the object recommendation page is different from the display mode of the second object comprises:
a display position of the object information of the first object in the object recommendation page is different from a display position of the second object; and/or
a display form of the object information of the first object in the object recommendation page is different from a display form of the second object.

4. The interaction method of claim 3, wherein the interaction control is an ordering control; and after displaying the object recommendation page, the method further comprises:
in response to a trigger operation on the ordering control of the first object, displaying the information confirmation page of the first object; and
in response to a submission operation triggered on the information confirmation page, generating an order of the first object.

5. The interaction method of claim 3, wherein the object recommendation page comprises a first display region, the first display region is configured to display the object information of the first object and the object information of the plurality of second objects;
the display position of the object information of the first object in the object recommendation page is different from the display position of the second object comprises:
displaying the object information of the first object at a first display position of the first display region; and displaying the object information of the second object at a display position other than the first display position; and/or
the display form of the object information of the first object in the object recommendation page is different from the display form of the second object comprises:
highlighting a first object display region in the object recommendation page, the first object display region being used to display the object information of the first object; and not highlighting a second object display region in the object recommendation page, the second object display region being used to display the object information of the second object.

6. The interaction method of claim 5, wherein highlighting the first object display region in the object recommendation page comprises:
highlighting a contour line of the first object display region based on a predetermined highlight color; and/or
after displaying the object recommendation page, the method further comprises at least one of:
in response to an interactive operation triggered for the object recommendation page, not highlighting the first object display region;
in response to there being no interactive operation triggered for the object recommendation page within a predetermined duration, not highlighting the first object display region.

7. The interaction method of claim 1, wherein the object recommendation page comprises a first display region and a second display region, the first display region is located below the second display region, the first display region is configured to display the object information of the first object and the object information of the plurality of second object, and the second display region is configured to display at least one function item information and/or at least one recommendation item information;
displaying the object recommendation page comprises:
displaying the first display region on the object recommendation page, and not displaying the second display region; and/or
after displaying the object recommendation page, the method further comprises:
in response to an object recommendation page update operation, displaying an updated object recommendation page, the first display region and the second display region being displayed in the updated object recommendation page, the first display region being used to display object information of an updated third object.

8. An interaction apparatus, comprising:
a video playing module configured to play a target video associated with a first object; and
a page displaying module configured to, in accordance with a determination that interactive information of the target video meets a predetermined recommendation condition, display an object recommendation page in response to a recommendation trigger operation, wherein the object recommendation page displays object information of the first object and object information of a plurality of second objects; the number of information types in the object information of the first object is greater than the number of information types in the object information of the second object, and/or a display mode of the object information of the first object in the object recommendation page is different from a display mode of the second object.

9. An electronic device, comprising:
one or more processors;
a storage device storing one or more programs;
the one or more programs, when executed by the one or more processors, causing the one or more processors to implement the interaction method according to any of claims 1 to 7.

10. A storage medium comprising computer-executable instructions which, when executed by a computer processor, perform the interaction method of any of claims 1 to 7.
